# FASCICULE DE BREVET EUROPEEN

(11) **EP 2 716 495 B1**
(45) Date de publication et mention de la délivrance du brevet: **08.05.2019**
(21) Numéro de dépôt: 13306369.3
(22) Date de dépôt: 02.10.2013
(51) Int. Cl.: B60P 1/02, B60P 3/36

(54) **Construction habitable industrialisée déplaçable sur roues**
Bewohnbarer Fertigbau, der auf Rädern bewegbar ist
Industrialised habitable construction which can be moved on wheels

(30) Priorité: 02.10.2012 FR 1259341
(43) Date de publication de la demande: 09.04.2014
(73) Titulaire: Samibois-Samiplast, 85220 Coex (FR)
(72) Inventeur: Jolly, Patrick, 85170 Belleville Sur Vie (FR)
(74) Mandataire: Jacobacci Coralis Harle

(56) Documents cités:
- FR-A- 622 825
- FR-A- 1 155 702
- NL-A- 6 611 026
- US-A- 3 629 884
- US-A- 4 513 984

## Description

### DOMAINE TECHNIQUE AUQUEL SE RAPPORTE L'INVENTION

La présente invention concerne le domaine des constructions habitables industrialisées, parmi lesquelles on trouve notamment les résidences mobiles de loisirs (mobil-homes), les habitats légers de loisirs (HLL), les constructions modulaires, les bâtiments toilés meublés (BTM), ou encore les caravanes. Elle concerne plus particulièrement une construction habitable de ce genre, équipée de roues pour permettre son déplacement sur le sol.

### ARRIERE-PLAN TECHNOLOGIQUE

Les constructions habitables industrialisées consistent en des habitats légers, préfabriqués au moins partiellement en usine, formées d'un plancher horizontal à partir duquel s'étend vers le haut un cloisonnement vertical (constituant une ou plusieurs pièces habitables) surmonté d'une toiture.

Certaines de ces constructions (en particulier les habitats légers de loisirs (HLL), les constructions modulaires ou les bâtiments toilés meublés (BTM)) ne sont pas équipées de moyens de mobilité.
Elles peuvent être montées sur le site de leur implantation, à partir de composants préfabriqués ; mais ce montage est alors lié aux aléas de chantier (environnement, météo, etc.).
Dans d'autres cas, elles sont intégralement montées en usine et leur mise en place nécessite, après déplacement jusqu'au site d'implantation, des moyens de levage importants du type grue, nécessitant un environnement adapté.

D'autres de ces constructions (en particulier les résidences mobiles de loisirs (mobil-homes) ou caravanes) conservent en permanence leurs moyens de mobilité (roues et timon de traction) pour pouvoir quitter leur emplacement dans un délai court.

De ce fait, classiquement, ces résidences mobiles sont positionnées sur leur emplacement dédié avec leurs roues en saillie sous le plancher.
Très généralement, le plancher repose sur le sol par l'intermédiaire de cales rapportées qui permettent de surélever légèrement les roues pour éviter leur contact avec le sol.

Mais la présence de ces roues en saillies entraîne une surélévation du niveau supérieur du plancher par rapport au sol, qui peut atteindre 50 à 70 cm.

Cette surélévation est source d'inconfort et elle est de nature à limiter les allers et venues de l'extérieur vers l'intérieur, et inversement ; en outre, elle impose la présence d'un marchepied pour accéder au volume habitable ou pour le quitter, et éventuellement aussi d'un garde-corps si la construction est équipée d'une terrasse, ces marchepieds et garde-corps générant des coûts supplémentaires et constituant des structures à risque de chutes.

On connait encore du document US-3 629 884 un ensemble véhicule/remorque-bateau/caravane, adapté pour permettre :
- le transport de la caravane sur route, portée par le véhicule, et
- le transport de la caravane sur l'eau, portée par la remorque - bateau.
Pour cela, la caravane consiste en une construction habitable prémontée comportant un plancher horizontal à partir duquel s'étendent des parois verticales et une toiture.
Selon un premier mode de réalisation, le plancher de la caravane est équipé de roues montées folles en rotation sur des supports fixes, pour permettre sa mobilité, en particulier entre la remorque/bateau et le véhicule.
Selon une variante de réalisation, le transfert de la caravane entre ses deux moyens de transport est réalisé par des manoeuvres de surélévation/abaissement de la construction au moyen de vérins-béquilles.
Le véhicule comporte de son côté un plateau porteur, juste derrière la cabine de conduite, permettant la réception et le verrouillage amovible de la caravane.
Pour sa part, la remorque-bateau comporte un plancher dont le dessus est adapté pour recevoir de manière amovible la caravane, et dont le dessous est équipé d'une pluralité d'organes flotteurs adaptés pour flotter sur l'eau.
Cette remorque-bateau comporte un timon d'attelage, ainsi qu'une paire de roues pour permettre son déplacement, tracté par le véhicule.
Elle comporte également un moteur pour son déplacement sur l'eau.
Les roues qui équipent ce plancher sont montées sur un support adapté pour permettre leur escamotage lorsque ladite remorque-bateau est utilisée dans l'eau.

Cependant, comme les roues qui équipent le plancher de la caravane sont prévues fixes, on retrouve les problèmes de surélévation mentionnés ci-dessus, ces problèmes de surélévation étant d'autant plus présents lorsque le plancher de la caravane est doublé par le plancher de la remorque-bateau.

On connait encore du document FR-1 155 702 une remorque roulante pour le camping, comprenant un plancher muni d'un timon d'attelage et à partir duquel s'étendent des parois latérales et une toiture, et du document NL-6 611 026 une remorque sur roues, avec timon d'attelage, munie de parois latérales déployables pour former le plancher d'une construction habitable.
Mais ces constructions sont bien particulières puisqu'elles sont déployables, avec des roues solidaires des parois latérales pivotantes, ces roues s'escamotant sous le plancher lors du pivotement desdites parois latérales.

Le document US 4 513 984 divulgue une construction habitable industrialisée déplaçable sur roues selon le préambule de la revendication 1.

### OBJET DE L'INVENTION

La présente invention vise à remédier aux inconvénients précités en proposant une construction habitable, intégralement ou quasi-intégralement montée en usine (avec un plancher horizontal, des parois de cloisonnement verticales et une toiture), disposant de moyens qui permettent son déplacement, et dont le plancher est apte à reposer au sol (directement ou par l'intermédiaire de cales), cela en limitant la surélévation de son niveau supérieur.

Dans ce cadre, la construction habitable déplaçable sur roues conforme à l'invention, comprend un plancher d'axe longitudinal L, à partir duquel s'élève un cloisonnement surmonté d'une toiture, lequel plancher est muni d'au moins une paire de roues montées libres en rotation autour d'un axe, de part et d'autre dudit axe longitudinal L, et d'un système de timon pour permettre sa traction ; et cette construction est caractérisée par le fait que chacune desdites roues est solidarisée avec ledit plancher par des moyens qui permettent sa mobilité entre :
- une position basse, dans laquelle son axe de rotation s'étend horizontalement, autorisant le roulage, les axes des deux roues de ladite paire de roues étant alors alignés, et
- une position haute, dans laquelle son axe de rotation est incliné par rapport à l'horizontale, assurant son escamotage au moins partiel.

Selon une caractéristique préférentielle, en position haute, l'axe de rotation de chaque roue s'étend verticalement, à plus ou moins 10° près.

Selon encore une autre particularité, le plancher, comporte une épaisseur E et, en position haute escamotée, chaque roue est complètement ou quasi-complètement intégrée dans ladite épaisseur E du plancher.

D'autre part, les moyens qui permettent la mobilité de chaque roue entre sa position basse et sa position haute comprennent avantageusement :
- un support de roue, sur lequel est montée une structure constituant ledit axe de roue, et qui est muni de moyens pour son articulation sur le plancher autour d'un axe horizontal perpendiculaire à l'axe de ladite roue, et
- des moyens d'actionnement dudit support de roue.

Selon encore une autre caractéristique, les moyens d'actionnement correspondants consistent de préférence en au moins une biellette de manoeuvre :
- dont l'une des extrémités comporte une articulation sur ledit support de roue, et
- dont l'autre extrémité comporte une articulation sur un système d'écrou monté mobile en translation dans une structure de glissière qui s'étend perpendiculairement à l'axe de pivotement dudit support de roue.
En outre, ce système d'écrou coopère avec une vis sans fin intégrée dans la structure de glissière précitée, et dont l'une des extrémités est équipée de moyens permettant sa manoeuvre en rotation autour de son axe longitudinal, avantageusement une structure pour la réception d'une manivelle.

Selon encore une autre particularité, une barre entretoise amovible assure la liaison des supports des deux roues dont les axes sont alignés, en position basse.

Selon une forme de réalisation particulière, la construction habitable comprend au moins deux paires de roues escamotables, agencées de telle sorte que, lorsqu'elles sont en position basse : - les deux axes de roues de chacune desdites paires soient alignés, et - les axes de roues desdites deux paires de roues s'étendent parallèlement l'un à l'autre.
Dans ce cadre, le même support articulé porte avantageusement deux roues de paires différentes.

Selon encore une forme de réalisation avantageuse, la construction habitable comporte au moins deux caissons, chacun délimité par des longerons et des traverses métalliques, et chacun rapporté au moins partiellement dans l'épaisseur E du plancher. Chacun de ces caissons sert de support à l'axe de pivotement du support de roue associé et sert à l'intégration au moins partielle de ladite ou desdites roues associées, en position haute escamotée.

### DESCRIPTION DETAILLEE D'UN EXEMPLE DE REALISATION

L'invention sera encore illustrée, sans être aucunement limitée, par la description suivante en relation avec les dessins annexés dans lesquels :
- la figure 1 est une vue schématique de côté d'une construction habitable conforme à l'invention, illustrée ici avec ses roues en position basse ;
- la figure 2 est une vue schématique de dessous de la construction habitable illustrée sur la figure 1 ;
- la figure 3 est une vue schématique de côté de la même construction habitable, illustrée ici avec ses roues en position haute escamotée ;
- la figure 4 est une vue schématique de dessous de la construction habitable de la figure 3 ;
- la figure 5 est une vue schématique détaillant les moyens d'actionnement d'un support de roue de la construction habitable des figures 1 à 4, pour la mobilité de cette roue entre ses positions basse de roulage (illustrée en traits forts) et haute escamotée (illustrée en pointillés) ;
- les figures 6 à 8 illustrent schématiquement, en trois étapes, le déploiement d'une roue de la construction habitable conforme à l'invention, depuis sa position basse de roulage jusqu'à sa position haute escamotée ;
- la figure 9 est une vue en perspective montrant la coopération de la vis sans fin de manoeuvre avec le système d'écrou mobile dans sa structure de glissière ;
- la figure 10 est une vue en éclaté des moyens d'actionnement illustrés sur les figures 5 à 9 ;
- la figure 11 est une vue de dessous d'une variante de réalisation d'une construction habitable selon l'invention.

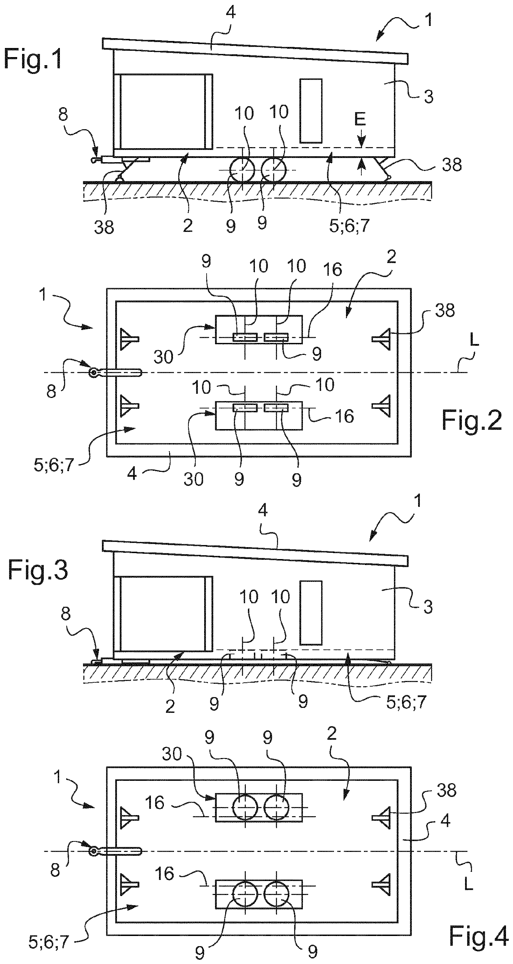

La construction habitable 1 illustrée sur les figures 1 à 4 est constituée d'un plancher 2 d'épaisseur E, à partir de la face de dessus duquel s'élève un cloisonnement 3 surmonté d'une toiture 4.

Le cloisonnement 3 comprend, de manière classique, des parois périphériques verticales équipées d'une ou de plusieurs porte(s) et fenêtre(s), et éventuellement des parois intérieures pour la séparation des pièces habitables.

Cette construction habitable 1 est intégralement montée en usine, avec le cloisonnement 3 monté immobile sur le plancher 2.

Le plancher 2 consiste en un châssis porteur 5, formé d'un assemblage de poutres 6 en bois ou en métal, recouvert par un plateau supérieur 7.

Ce plancher 2, de forme générale rectangulaire, comporte un axe longitudinal médian L.
Il est muni d'un timon 8 aménagé à l'une de ses extrémités, sur l'axe médian longitudinal L, et de roues 9 agencées pour permettre le déplacement de la construction habitable 1 par roulage sur le sol.

Ces roues 9 sont montées libres autour de leur axe de rotation 10, et elles sont solidarisées avec le plancher 2 (plus particulièrement avec son châssis porteur 5) par des moyens qui permettent leur mobilité entre :
- une position basse (figures 1 et 2), dans laquelle leur axe de rotation 10 s'étend horizontalement autorisant le roulage sur le sol (l'axe 10 s'étend alors perpendiculairement à l'axe longitudinal L de l'habitat 1, et le plan des roues 9 s'étend verticalement), et
- une position haute (figures 3 et 4), dans laquelle leur axe de rotation 10 est incliné par rapport à l'horizontale, assurant leur escamotage au moins partiel (et de préférence total).
Dans cette position haute, l'axe 10 des roues 9 s'étend avantageusement verticalement, à plus ou moins 10° près, pour assurer un escamotage optimal.

Cette construction habitable mobile 1 dispose ainsi en permanence de ses moyens de déplacement, avec des roues 9 qui peuvent être placées en position active de roulage, en saillie sous le plancher 2, ou qui peuvent être placées en position inactive, escamotées sous ce plancher 2 (de préférence partiellement intégrées dans l'épaisseur E de ce plancher, et encore de préférence, totalement intégrées dans cette épaisseur E de plancher), de manière à ce que ladite construction habitable 1 puisse être disposée sur son emplacement d'accueil avec le niveau supérieur de son plancher 2 à une hauteur minimale par rapport au sol (le plus proche possible du sol).

Le plancher 2 comporte au moins une paire de roues 9, et dans chaque paire, les deux roues 9 :
- sont positionnées de manière symétrique par rapport à l'axe médian longitudinal L, et
- sont agencées de sorte qu'une fois en position basse, leurs axes de rotation 10 soient alignés (figures 1 et 2).

Si le plancher 2 est équipé de plusieurs paires de roues 9, l'entraxe des roues 9 de chaque paire peut être identique ou différent (lorsque ces roues 9 sont en position basse) ; d'autre part, toujours lorsque les roues 9 sont en position basse, les axes de rotation 10 des roues des différentes paires sont parallèles entre eux.

Dans le mode de réalisation illustré sur les figures, le plancher 2 de la construction 1 est équipé de deux paires de roues 9, et les deux roues de ces deux paires qui sont disposées du même côté de l'axe longitudinal médian L sont manoeuvrées simultanément entre leurs positions basse de roulage et haute escamotée.

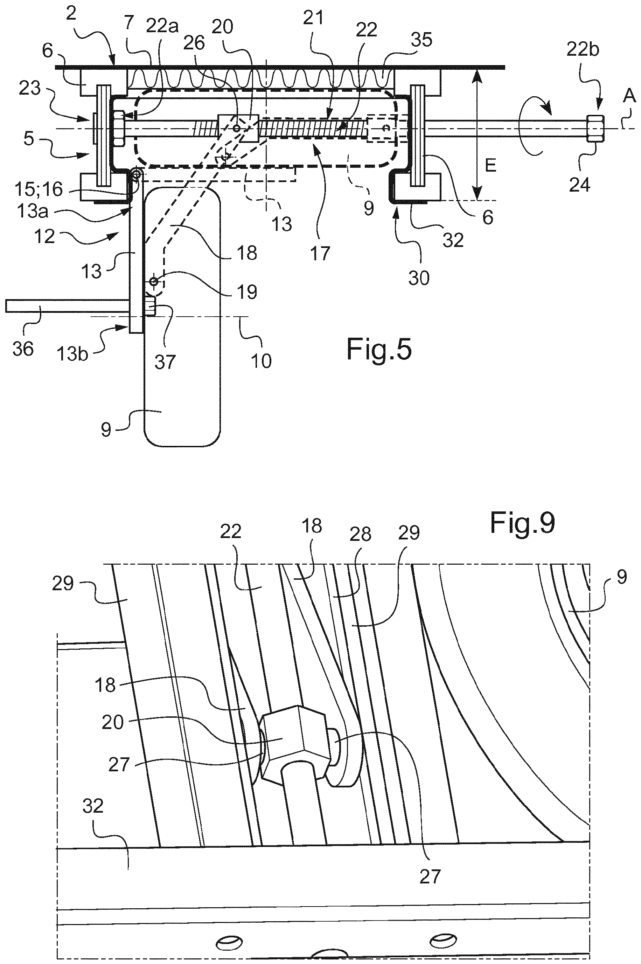

Les figures 5 à 10 détaillent les moyens 12 qui permettent la mobilité de chaque roue 9 (ou en l'occurrence des couples de roues 9) entre les positions basse et haute précitées.

On comprend que des moyens identiques sont aménagés de manière symétrique de l'autre côté de l'axe longitudinal médian L du plancher 2.

Comme on peut le voir sur ces figures 5 à 10, ces moyens 12 comprennent :
- d'une part, un support de roue 13, sur lequel sont montés deux tourillons 14 matérialisant les axes de roues 10, et qui est muni de moyens 15 pour son articulation sur le plancher 2 autour d'un axe horizontal 16, et
- d'autre part, des moyens 17 d'actionnement de ce support de roue 13.

Le support de roue 13 consiste en un volet plan, dont l'une des bordures 13a est articulée autour de l'axe 16 sur l'une des poutres 6 du châssis porteur 5 du plancher 2 (en l'occurrence sur un longeron 6 parallèle à l'axe longitudinal L), et dont la bordure opposée 13b comporte les deux tourillons 14 matérialisant les axes de roues 10, sur lesquels les roues 9 sont emmanchées à rotation libre, et verrouillées.

Les moyens 15 pour réaliser l'articulation 16 consistent en un système de charnière, par exemple une charnière du type à piano, avec un axe rapporté qui vient s'emmancher dans des pièces cylindriques complémentaires solidaires du support de roue 13 et de la poutre support 6.

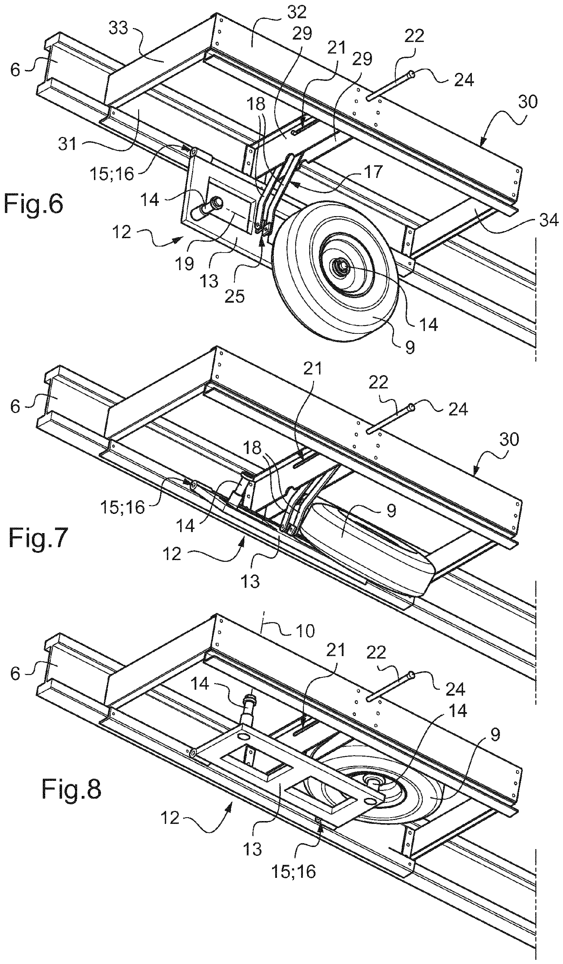

Sur les figures 6 à 8, une seule des deux roues 9 est représentée par souci de simplification et pour faciliter la compréhension.

Les tourillons 14 s'étendent perpendiculairement au plan du support de roue 13, du même côté de celui-ci.

L'axe d'articulation 16 du support de roue 13 s'étend parallèlement à l'axe longitudinal médian L du plancher 2.

Le support de roue 13 est soumis aux moyens d'actionnement 17 qui permettent :
(i) son positionnement dans un plan vertical, tel qu'illustré sur les figures 1, 2, 5 et 6, dans lequel l'articulation 16 est située au niveau de sa bordure supérieure 13a, et dans lequel les tourillons 14 (et donc les axes de roue 10) s'étendent horizontalement ou sensiblement horizontalement, pour placer les roues 9 dans leur position basse de roulage, et
(ii) son positionnement dans un plan horizontal, tel qu'illustré sur les figures 3, 4 et 8, dans lequel les tourillons 14 (et donc les axes de roue 10) s'étendent verticalement ou sensiblement verticalement, orientés vers le haut, pour placer les roues 9 dans leur position haute escamotée.

Les moyens d'actionnement 17 sont ici constitués d'un couple de biellettes 18 agencées parallèlement l'une à l'autre, dont l'une des extrémités est articulée en 19 sur le support de roue 13, et dont l'autre extrémité est articulée sur un système d'écrou 20 - qui est monté mobile en translation dans une structure de glissière 21, et - qui coopère avec une vis sans fin 22 intégrée dans ladite structure de glissière 21.

Sur les figures, on remarque la forme coudée ou en dièdre des biellettes 18, avec leur sommet orienté vers le haut pour assurer un effet de blocage mécanique fin de course, en position basse de roue, comme expliqué plus loin.

L'une des extrémités 22a de la vis sans fin 22 est fixée sur le châssis porteur 5 par des moyens 23 qui permettent sa rotation autour de son axe longitudinal A ; son autre extrémité 22b comporte des moyens 24 qui permettent la fixation amovible d'une manivelle de manoeuvre (non représentée), permettant la mise en rotation de ladite vis 22, dans un sens ou dans l'autre, autour de son axe longitudinal A.
A titre de variante, cette manivelle peut être remplacée par une motorisation adaptée.

Les moyens d'actionnement 17 sont ménagés entre les deux roues 9 portées par le support 13.

L'articulation 19 des biellettes 18 est obtenue au moyen d'une chape 25 montée dans la partie centrale du support de roue 13, du même côté que les tourillons 14. Cette articulation 19 s'étend parallèlement à l'articulation 16 du support 13 sur le châssis porteur 5, et parallèlement à l'axe longitudinal L de la construction habitable 1.

Les deux biellettes 18 s'étendent parallèlement l'une à l'autre à quelques centimètres de distance.

Côté structure de glissière 21, les deux biellettes 18 sont articulées en 26 sur des tourillons 27 qui s'étendent de part et d'autre du système d'écrou mobile 20.

Au niveau de leurs extrémités, ces deux tourillons 27 s'étendent au travers de lumières allongées 28 ménagées dans des traverses métalliques 29, pour constituer ladite structure de glissière 21. Les lumières 28 s'étendent en regard l'une de l'autre, horizontalement ou sensiblement horizontalement, perpendiculairement à l'axe d'articulation 16 et à l'axe longitudinal L.

Ainsi, les deux traverses 29 avec leurs lumières 28 sont positionnées de part et d'autre du couple de biellettes 18, qui elles-mêmes sont positionnées de part et d'autre du système d'écrou 20 guidé dans lesdites lumières 28 au moyen de ses tourillons 27.

Les deux traverses 29 constituent des butées latérales qui limitent les possibilités de flambage des biellettes 18.

Les extrémités libres des tourillons 27 peuvent être filetées pour permettre la réception d'un écrou adapté pour maintenir l'ensemble et empêcher l'extraction desdits tourillons hors des lumières 28 (tout en conservant la mobilité en translation du système d'écrou 20).

La vis sans fin 22 coopère avec l'orifice central taraudé du système d'écrou 20 ; son axe longitudinal A s'étend perpendiculairement à l'axe 16 du support 13, et perpendiculairement à l'axe longitudinal L de la construction habitable 1.

Les deux traverses 29 s'étendent parallèlement l'une à l'autre ; elles peuvent être rapportées et leurs extrémités fixées directement sur deux longerons parallèles 6 du châssis porteur 5.
De préférence, comme illustré sur les figures 5 à 10, ces deux traverses 29 font partie intégrante d'un caisson métallique 30 rapporté et fixé sur le châssis porteur 5, pour la réception des deux roues 9 en position escamotée haute. Ce caisson 30 est au moins partiellement intégré dans l'épaisseur E du plancher 2, et même de préférence totalement intégré dans cette épaisseur E.

Comme on peut le voir sur ces figures 5 à 10, le caisson 30 est constitué de deux longerons métalliques 31 et 32, de deux traverses d'extrémités 33 et 34 et des deux traverses centrales 29.

Les deux longerons 31 et 32 sont agencés pour venir se plaquer contre deux longerons porteurs parallèles 6 du châssis porteur 5 ; ils sont conformés pour suivre au mieux le contour de la face en regard de ces longerons porteurs 6 et ils sont fixés à ces derniers par tout moyen approprié, par exemple par boulonnage.

Les traverses d'extrémités 33 et 34 s'étendent perpendiculairement aux longerons 31 et 32, et leurs extrémités sont fixées par tout moyen approprié aux extrémités desdits longerons 31 et 32, par exemple par boulonnage.
De leur côté, les traverses centrales 29 s'étendent perpendiculairement aux longerons 31 et 32, et leurs extrémités sont solidarisées avec la partie centrale desdits longerons 31 et 32, par tout moyen approprié, par exemple par boulonnage.

La hauteur du caisson 30 formé de l'assemblage des longerons 31, 32 et des traverses 29, 33 et 34 correspond approximativement à la hauteur du châssis porteur 5.

Ce caisson 30 permet de renforcer le châssis porteur 5, en particulier lorsqu'il est réalisé en poutres de bois, et l'un de ses longerons (en l'occurrence le longeron 31) sert de support aux moyens charnière 15, 16 du support de roue 13.

Sur la figure 5, on remarque que le caisson 30 est totalement intégré dans l'épaisseur E du plancher 2 ; en partie supérieure, ce caisson 30 comporte une structure d'isolation 35, plaquée contre la face inférieure du plateau supérieur 7, de manière à limiter l'effet de pont thermique.

Comme on peut le voir sur les figures 5 à 8, la vis sans fin 22 traverse les longerons 31 et 32 (et éventuellement, les longerons porteurs 6), par l'intermédiaire d'orifices appropriés, pour s'étendre dans la structure de glissière 21.

Comme mentionné précédemment, l'extrémité 22a de la vis sans fin 22 est fixée sur le châssis porteur 5 de manière adaptée pour assurer son maintien en translation, tout en permettant sa rotation autour de son axe longitudinal A.
Plus précisément, les moyens de fixation 23 correspondants peuvent consister en deux écrous montés sur l'extrémité filetée 22a de la vis sans fin 22, de part et d'autre du longeron 31, avec un certain jeu pour autoriser la rotation souhaitée. Une ouverture traversante est alors ménagée dans le longeron porteur 6 contre lequel le longeron 31 est fixé, pour loger l'écrou d'extrémité.

L'extrémité 22a de la vis sans fin 22 est disposée côté axe longitudinal L de la construction habitable, alors que son extrémité opposée 22b est orientée vers l'extérieur (tout en restant dans l'encombrement du plancher 2), de manière à pouvoir être accessible sur le côté de la construction 1, en vue des manoeuvres de déploiement et de repliement des roues 9.

Dans ce cadre, l'axe d'articulation 16 du support 13 s'étend côté axe longitudinal L (figures 2 et 4) et le support de roue 13 se déploie et se replie latéralement, vers l'extérieur, par rapport audit axe longitudinal L.

Dans le mode de réalisation illustré, la construction habitable 1 comporte deux paires de roues 9, chaque paire étant constituée de deux roues disposées de part et d'autre de l'axe longitudinal médian L ; et de chaque côté de cet axe L, un même support 13 supporte deux roues de paires différentes.

En position basse de roulage (figures 1, 2, 5 et 6), les roues 9 de chaque paire de roues s'étendent de part et d'autre de l'axe longitudinal L, avec leurs axes 10 alignés et s'étendant perpendiculairement audit axe L.

Les deux supports de roue 13 s'étendent parallèlement l'un à l'autre, chacun dans un plan vertical parallèle audit axe L.

Dans cette position, on remarque qu'une partie du chant des biellettes 18 vient en appui contre le support 13 associé (voir figures 5 et 6), du fait de leur conformation en dièdre ; cette particularité permet d'obtenir un blocage fin de course efficace des systèmes d'écrou 20 et des supports 13 en position basse.

En outre, de préférence, les deux supports 13 en regard sont verrouillés dans cette position verticale au moyen d'une barre entretoise amovible 36 qui les relie.

Cette barre entretoise 36, représentée partiellement sur la figure 5, comporte avantageusement des épaulements d'extrémités qui viennent en appui contre les faces en regard des supports 13, et à partir desquels s'étendent des tiges filetées qui viennent s'engager chacune dans un orifice aménagé dans le support 13 en correspondance.
Ces tiges filetées coopèrent chacune avec un écrou de verrouillage 37 visible sur la figure 5.

Cette barre entretoise 36 maintient ainsi un écartement constant entre les deux supports 13 pour sécuriser les déplacements de la construction habitable 1.

On notera que d'autres types de moyens de verrouillage peuvent être prévus pour assurer le maintien vertical des supports 13, par exemple des tiges, des platines ou des crochets amovibles, assurant leur liaison avec le châssis porteur 5.

La construction habitable 1 peut alors être déplacée par roulage sur le sol, en particulier en utilisant son timon 8 attelé à un véhicule tracteur approprié.

Si besoin, en cas d'arrêt temporaire, et si l'escamotage des roues 9 n'est pas souhaité ou justifié, on peut stabiliser la construction habitable 1 au moyen de béquilles d'extrémités classiques 38, comme illustré sur la figure 1.

Une fois la construction habitable 1 positionnée sur son emplacement dédié, elle peut être posée sur le sol de réception, avec ses roues 9 en position haute escamotée.

Pour cela, cette construction 1 est légèrement surélevée, par exemple au moyen d'un système de levage du type vérin, béquille ou autre et, après enlèvement de la barre entretoise 36 (si elle est présente), la manoeuvre d'escamotage des roues 9 s'effectue de la manière illustrée sur les figures 6 à 8.

Ainsi, partant d'une position dans laquelle l'axe 10 des roues 9 s'étend horizontalement (figures 5 et 6), on manoeuvre en rotation la vis sans fin 22 au moyen d'une manivelle ou d'une motorisation (non représentées), par l'intermédiaire des moyens de connexion dédiés 24.

Au fur et à mesure de la rotation de la vis 22, le système d'écrou mobile 20 se déplace vers l'extérieur, à l'opposé de l'axe L, dans la structure de glissière 21 et il entraîne le couple de biellettes 18, assurant simultanément le pivotement du support de roue 13 vers le haut et vers l'extérieur (à l'opposé de l'axe longitudinal L), conformément à la représentation de la figure 7.

Les deux roues 9 s'escamotent et elles pénètrent progressivement dans le caisson de réception 30, jusqu'à intégration complète, tel qu'illustré sur la figure 8.

Chaque roue 9 portée par le même support 13 vient se positionner dans sa partie de caisson 30, entre les deux longerons 31, 32, l'une des traverses d'extrémités 33, 34 et l'une des traverses centrales 29.

L'articulation 16 est positionnée de sorte à optimiser l'escamotage complet des roues 9 dans le caisson 30.

Dans leur position haute escamotée (figure 8), les roues 9 s'étendent dans un plan horizontal ou sensiblement horizontal, avec leur axe 10 vertical (à plus ou moins 10° près).

De son côté, le support de roue 13 s'étend dans un plan horizontal ou sensiblement horizontal.

Des moyens de verrouillage amovibles peuvent être prévus pour assurer le maintien du support de roue 13 en position escamotée haute, par exemple en forme de tige, platine ou crochet raccordant ledit support 13 et le châssis porteur 5.

Une manoeuvre identique d'escamotage est réalisée de l'autre côté de la construction habitable 1, sur l'autre support de roue 13 disposé symétriquement par rapport à l'axe longitudinal L.

Ensuite, les moyens de levage sont désactivés pour abaisser la construction habitable 1 en vue de faire reposer la face inférieure de son plancher 2 au plus près du sol, en appui sur des cales ou sur des longrines de faible hauteur, permettant ainsi de minimiser la surélévation de la face supérieure de son plateau de plancher 7 par rapport au sol.

Les roues 9 restent alors malgré tout prêtes à être abaissées de nouveau, ceci de manière simple et rapide par une manoeuvre inverse des vis sans fin 22, à tout moment, en cas de besoin (pour retrouver la mobilité).

Dans une variante de réalisation, chaque support 13 peut être agencé pour manoeuvrer une seule roue 9 des paires de roues.

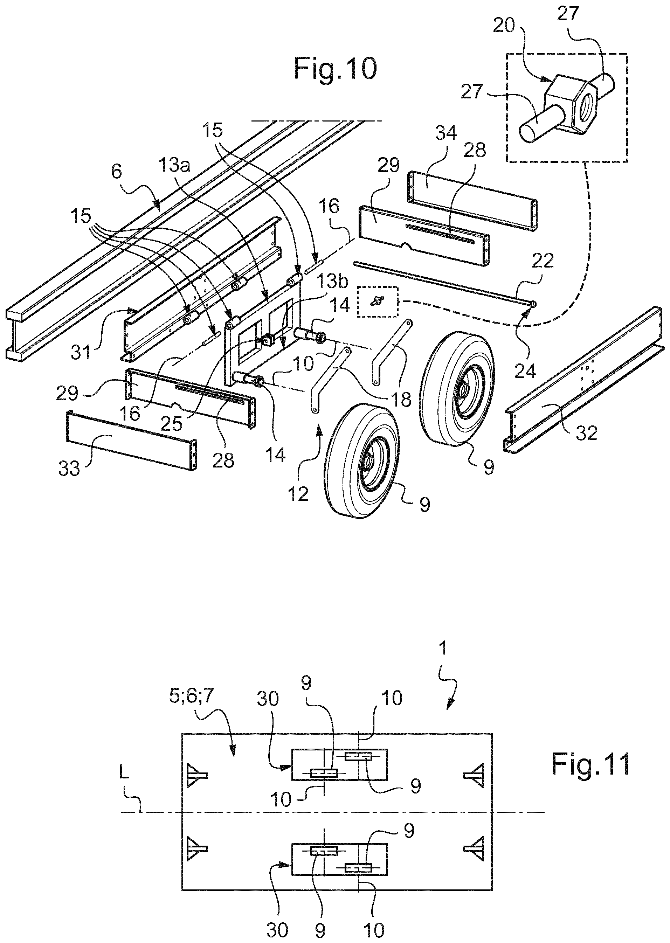

Dans le cas où la construction habitable 1 comporte plusieurs paires de roues, l'entraxe des roues de chaque paire peut être identique.
Comme illustré sur la figure 10, cet entraxe des roues entre les différentes paires de roues peut également être différent.
Dans ce cas, chaque caisson 30 ménagé de part et d'autre de l'axe longitudinal L de la construction habitable 1 peut intégrer deux roues 9 associées chacune à son propre support 13, ces supports étant décalés par rapport à l'axe longitudinal L et étant manoeuvrables de manière inverse (l'un agencé pour faire pivoter une roue vers l'extérieur par rapport à l'axe longitudinal L, et l'autre agencé pour faire pivoter l'autre roue vers l'intérieur par rapport à l'axe longitudinal L).
De la sorte, en position haute totalement escamotée, les axes des deux roues d'un même caisson sont alignés parallèlement à l'axe longitudinal L.

On notera que le pivotement des roues 9 à partir de leur position basse de roulage peut être prévu inférieur à 90°, par exemple si la structure du châssis porteur 5 limite les possibilités d'escamotage.

D'autre part, on notera également qu'en présence d'un châssis porteur 5 réalisé en poutres métalliques, le caisson de renfort 30 peut ne pas être prévu. Dans ce cas, les moyens charnière 15 pour réaliser l'articulation 16 du support de roue 13 seront ménagés directement entre ce support 13 et l'un des longerons 6 du châssis porteur 5.

S'il est présent, le caisson 30 peut être réalisé en structure assemblée par boulonnage (démontable), comme illustré sur les figures 5 à 10.
Il peut aussi être réalisé d'un seul tenant en tôle pliée, en structure assemblée par mécano-soudage, ou autre.

De plus, l'extrémité libre 22b de la vis sans fin 22 peut être aménagée pour coopérer avec une goupille amovible (par exemple montée sur un support fixé au châssis porteur 5) pour bloquer ses possibilités de rotation autour de son axe longitudinal A, ce système de goupillage permettant de verrouiller le support de roue 13 en position haute et/ou en position basse.

## Revendications

1. Construction habitable industrialisée déplaçable sur roues, comprenant un plancher (2) d'axe longitudinal (L), à partir duquel s'élève un cloisonnement (3) surmonté d'une toiture (4), lequel plancher (2) est muni d'au moins une paire de roues (9) montées libres en rotation autour d'un axe (10), de part et d'autre dudit axe longitudinal (L), et d'un système de timon (8) pour permettre sa traction, **caractérisée en ce que** chacune desdites roues (9) est solidarisée avec ledit plancher (2) par des moyens qui permettent sa mobilité entre :
- une position basse, dans laquelle son axe de rotation (10) s'étend horizontalement, autorisant le roulage, les axes (10) des deux roues (9) de ladite paire de roues (9) étant alors alignés, et
- une position haute, dans laquelle son axe de rotation (10) est incliné par rapport à l'horizontale, assurant son escamotage au moins partiel.

2. Construction habitable selon la revendication 1, **caractérisée en ce que**, en position haute des roues (9), l'axe de rotation (10) de chaque roue (9) s'étend verticalement, à plus ou moins 10° près.

3. Construction habitable selon l'une quelconque des revendications 1 ou 2, **caractérisée en ce que** ledit plancher (2) comporte une épaisseur (E) et, en position haute escamotée, chaque roue (9) est complètement ou quasi-complètement intégrée dans ladite épaisseur (E).

4. Construction habitable selon l'une quelconque des revendications 1 à 3, **caractérisée en ce que** les moyens (12) qui permettent la mobilité de chaque roue (9) entre sa position basse et sa position haute, comprennent :
- un support de roue (13) sur lequel est montée une structure (14) constituant ledit axe de roue (10) et qui est muni de moyens (15) pour son articulation sur ledit plancher (2), autour d'un axe (16) horizontal perpendiculaire à l'axe de ladite roue (10), et
- des moyens (17) d'actionnement dudit support de roue (13).

5. Construction habitable selon la revendication 4, **caractérisée en ce que** lesdits moyens d'actionnement (17) consistent en au moins une biellette de manoeuvre (18) :
- dont l'une des extrémités comporte une articulation (19) sur ledit support de roue (13), et
- dont l'autre extrémité comporte une articulation (26) sur un système d'écrou (20) monté mobile en translation dans une structure de glissière (21) qui s'étend perpendiculairement à l'axe (16) de pivotement dudit support de roues (13),
lequel système d'écrou (20) coopère avec une vis sans fin (22) intégrée dans ladite structure de glissière (21) et dont l'une des extrémités (22b) est équipée de moyens (24) permettant sa manoeuvre en rotation autour de son axe longitudinal (A).

6. Construction habitable selon la revendication 5, **caractérisée en ce que** les moyens (24) de manoeuvre en rotation de ladite vis sans fin (22) consistent en une structure pour la réception d'une manivelle.

7. Construction habitable selon l'une quelconque des revendications 4 à 6, **caractérisée en ce qu'**il comporte une barre entretoise (36) amovible, assurant la liaison des supports (13) des deux roues (9) dont les axes sont alignés, en position basse.

8. Construction habitable selon l'une quelconque des revendications 4 à 7, **caractérisée en ce qu'**elle comprend au moins deux paires de roues escamotables (9), agencées de telle sorte que, lorsqu'elles sont en position basse, - les deux axes de roues (10) de chacune desdites paires soient alignés, et - les axes de roues (10) desdites deux paires s'étendent parallèlement l'un à l'autre.

9. Construction habitable selon la revendication 8, **caractérisée en ce qu'**elle comporte un même support (13) articulé pour deux roues (9) de paires différentes.

10. Construction habitable selon l'une quelconque des revendications 4 à 9, **caractérisée en ce qu'**elle comporte au moins deux caissons (30), chacun délimité par des longerons (31, 32) et des traverses (29, 33, 34) métalliques, et chacun rapporté au moins partiellement dans l'épaisseur (E) dudit plancher (2), chacun desdits caissons (30) servant de support à l'axe (16) de pivotement du support de roue (13) associé et servant à l'intégration au moins partielle de ladite ou desdites roues (9) associées, en position haute escamotée.

## Patentansprüche

1. Bewohnbarer Fertigbau der auf Rädern bewegbar ist, mit einem Boden (2) mit einer Längsachse (L), von dem aus sich eine Wandung (3) mit einem darüber liegenden Dach (4) erhebt, wobei der Boden (2) mit wenigstens einem Paar Rädern (9) versehen ist, die beiderseits der Längsachse (L) um eine Achse (10) freidrehend montiert sind, und mit einem Deichselsystem (8) zum Ziehen des Fertigbaus,
**dadurch gekennzeichnet, daß** jedes der Räder (9) mit dem Boden (2) durch Mittel fest verbunden ist, die dessen Beweglichkeit zwischen
- einer unteren Position, in der sich dessen Drehachse (10) horizontal erstreckt und ein Rollen ermöglicht, wobei die Achsen (10) der Räder (9) des Paars Räder (9) aufeinander ausgerichtet sind, und
- einer oberen Position, in der dessen Drehachse (10) gegenüber der Horizontalen geneigt ist, was deren wenigstens teilweises Einziehen sicherstellt,
ermöglichen.

2. Bewohnbarer Fertigbau gemäß Anspruch 1, **dadurch gekennzeichnet, daß** sich die Drehachse (10) jedes Rads (9) in der oberen Position der Räder (9) bis auf plus oder minus zehn Grad genau senkrecht erstreckt.

3. Bewohnbarer Fertigbau gemäß einem der Ansprüche 1 oder 2, **dadurch gekennzeichnet, daß** der Boden (2) eine Dicke (E) aufweist und daß jedes Rad (9) in der oberen, eingezogenen Position vollständig oder fast vollständig in der Dicke (E) untergebracht ist.

4. Bewohnbarer Fertigbau gemäß einem der Ansprüche 1 bis 3, **dadurch gekennzeichnet, daß** die Mittel (12), die die Beweglichkeit jedes Rads zwischen dessen unteren Position und dessen oberen Position ermöglichen,
- einen Radträger (13), an dem eine Struktur (14) angebracht ist, die die Radachse (10) bildet und die mit Mitteln (15) für deren Schwenken am Boden (2) um eine horizontale, zur Achse (10) des Rads senkrechte Achse (16) versehen ist, und
- Mittel (17) zum Betätigen des Radträgers (13)
aufweisen.

5. Bewohnbarer Fertigbau gemäß Anspruch 4, **dadurch gekennzeichnet, daß** die Betätigungsmittel (17) aus wenigstens einer Betätigungsstange (18) bestehen,
- deren eines Ende eine Anlenkung (19) am Radträger (13) aufweist und
- deren anderes Ende eine Anlenkung (26) an einem Mutternsystem (20) aufweist, das translatorisch beweglich in einer Gleitstruktur (21) montiert ist, die sich zur Schwenkachse (16) des Radträgers (13) senkrecht erstreckt,
wobei das Mutternsystem (20) mit einer Endlosschraube (22) zusammenwirkt, die in der Gleitstruktur (21) integriert ist und deren eines (22b) der Enden mit Mitteln (24) ausgestattet ist, die deren Betätigung zum Drehen um deren Längsachse (A) ermöglicht.

6. Bewohnbarer Fertigbau gemäß Anspruch 5, **dadurch gekennzeichnet, daß** die Mittel (24) für die Betätigung zum Drehen der Endlosschraube (22) aus einer Struktur zum Aufnehmen einer Kurbel bestehen.

7. Bewohnbarer Fertigbau gemäß einem der Ansprüche 4 bis 6, **dadurch gekennzeichnet, daß** er eine abnehmbare Zwischenstange (36) aufweist, die die Verbindung der Träger (13) der beiden Räder (9), deren Achsen in der unteren Position aufeinander ausgerichtet sind, sicherstellt.

8. Bewohnbarer Fertigbau gemäß einem der Ansprüche 4 bis 7, **dadurch gekennzeichnet, daß** er wenigstens zwei Paar einziehbare Räder (9) aufweist, die derart angeordnet sind, daß, wenn sie in der unteren Position sind, - die beiden Radachsen (10) jedes der Paare aufeinander ausgerichtet sind und - daß sich die Drehachsen (10) der beiden Paare parallel zueinander erstrecken.

9. Bewohnbarer Fertigbau gemäß Anspruch 8, **dadurch gekennzeichnet, daß** er für zwei Räder (9) verschiedener Paare einen selben Träger (13) aufweist.

10. Bewohnbarer Fertigbau gemäß einem der Ansprüche 4 bis 9, **dadurch gekennzeichnet, daß** er wenigstens zwei Kästen (30) aufweist, von denen jeder durch metallene Längs- (31, 32) und Querträger (29, 33, 34) begrenzt ist und von denen jeder wenigstens teilweise in der Dicke (E) des Bodens (2) untergebracht ist, wobei jeder der Kästen (30) als Träger der Schwenkachse (16) des zugehörigen Radträgers (13) dient und zur wenigstens teilweisen Unterbringung des zugehörigen Rads oder der zugehörigen Räder (9) in der oberen, eingezogenen Position dient.

## Claims

1. An industrialized habitable construction moveable on wheels, comprising a floor (2) of longitudinal axis (L), from which rises a partition (3) topped with a roof (4), said floor (2) being provided with at least one pair of wheels (9) mounted free in rotation about an axis (10), on either side of said longitudinal axis (L), and a drawbar system (8) for the traction thereof, **characterized in that** each of said wheels (9) is fastened to said floor (2) by means that allow the mobility thereof between:
- a lower position, in which its axis of rotation (10) extends horizontally, allowing the rolling, the axes (10) of the two wheels (9) of said pair of wheels (9) being then aligned, and
- an upper position, in which its axis of rotation (10) is inclined with respect to the horizontal, ensuring its at least partial retraction.

2. The habitable construction according to claim 1, **characterized in that**, in the upper position of the wheels (9), the axis of rotation (10) of each wheel (9) extends vertically, to within more or less 10°.

3. The habitable construction according to any one of claims 1 or 2, **characterized in that** said floor (2) has a thickness (E) and, in the upper retracted position, each wheel (9) is fully or almost-fully integrated into said thickness (E).

4. The habitable construction according to any one of claims 1 to 3, **characterized in that** the means (12) that allow the mobility of each wheel (9) between its lower position and its upper position, comprise:
- a wheel support (13) on which is mounted a structure (14) forming said wheel axis (10) and provided with means (15) for its articulation with said floor (2), about a horizontal axis (16) perpendicular to the axis of said wheel (10), and
- means (17) for actuating said wheel support (13).

5. The habitable construction according to claim 4, **characterized in that** said actuation means (17) consist in at least one operating rod (18):
- one end of which has an articulation (19) with said wheel support (13), and
- the other end of which has an articulation (26) with a nut system (20) mounted mobile in translation in a slide structure (21) that extends perpendicular to the pivoting axis (16) of said wheel support (13),
wherein said nut system (20) cooperates with an endless screw (22) integrated in said slide structure (21) and one end (22b) of which is equipped with means (24) for its rotational operation about its longitudinal axis (A),

6. The habitable construction according to claim 5, **characterized in that** the means (24) for rotational operation of said endless screw (22) consist in a structure for receiving a crank.

7. The habitable construction according to any one of claims 4 to 6, **characterized in that** it includes a removable spacer bar (36), providing the connection between the supports (13) of the two wheels (9) whose axes are aligned, in the lower position.

8. The habitable construction according to any one of claims 4 to 7, **characterized in that** it comprises at least to pairs of retractable wheels (9), arranged so that, when they are in the lower position, - the two wheel axes (10) of each of said pairs are aligned with each other, and - the wheel axes (10) of said two pairs extend parallel to each other.

9. The habitable construction according to claim 8, **characterized in that** it includes a same articulated support (13) for two wheels (9) of different pairs.

10. The habitable construction according to any one of claims 4 to 9, **characterized in that** it includes at least two boxes (30), each being delimited by metallic longitudinal members (31, 32) and transverse members (29, 33, 34), and each included at least partially in the thickness (E) of said floor (2), each of said boxes (30) serving as a support for the pivot axis (16) of the associated wheel support (13) and serving for the integration at least partial of said associated wheel(s) (9), in the upper retracted position.
